# EUROPEAN PATENT APPLICATION

(11) **EP 3 306 122 A1**
(43) Date of publication of application: **11.04.2018**
(21) Application number: 17192533.2
(22) Date of filing: 22.09.2017
(51) Int. Cl.: F16C 17/02, F16C 33/12, F16C 33/16, F16C 33/22, F04D 17/10, F04D 29/051, F04D 29/053, F04D 29/057

(54) **TURBOMACHINE**

(30) Priority: 04.10.2016 JP 2016196531
(71) Applicant: Panasonic Intellectual Property Management Co., Ltd., Osaka-shi, Osaka 540-6207 (JP)
(72) Inventor: SHOYAMA, Tadayoshi, Osaka 540-6207 (JP); OGATA, Takeshi, Osaka 540-6207 (JP); KOUDA, Kazuyuki, Osaka 540-6207 (JP); KONDO, Akihiro, Osaka 540-6207 (JP); HASEGAWA, Hiroshi, Osaka 540-6207 (JP)
(74) Representative: Eisenführ Speiser

(57) **Abstract**

A turbomachine (1) includes a shaft (10), an impeller (20), and a bearing (30). The shaft (10) includes a tapered portion (11) and a cylindrical portion (12). The impeller (20) includes a suction face (21) oriented in an axial direction of the shaft (10) and is fixed to the cylindrical portion (12). The impeller (20) sucks and delivers working fluid. The bearing (30) is arranged apart from the impeller (20) in a direction to which the suction face (21) is oriented and supports the shaft (10). The bearing (30) includes a tapered support face (32a) and a cylindrical support face (32b). At least part of the cylindrical support face (32b) is made from one selected from a group consisting of (a) an alloy that contains graphite and whose principal constituent is copper, (b) rubber, and (c) a material whose principal constituent is a silicon nitride or a silicon carbide.

## Description

### BACKGROUND

### 1. Technical Field

The present disclosure relates to turbomachines.

### 2. Description of the Related Art

A conventional turbomachine includes a thrust bearing that supports load in an axial direction (thrust load) accompanied by a pressure difference caused on both faces of an impeller, and a radial bearing that supports load in a radial direction (radial load), individually. The turbomachine may include an angular ball bearing that supports the thrust load and the radial load. As a bearing of a rotating shaft, a tapered bearing is known.

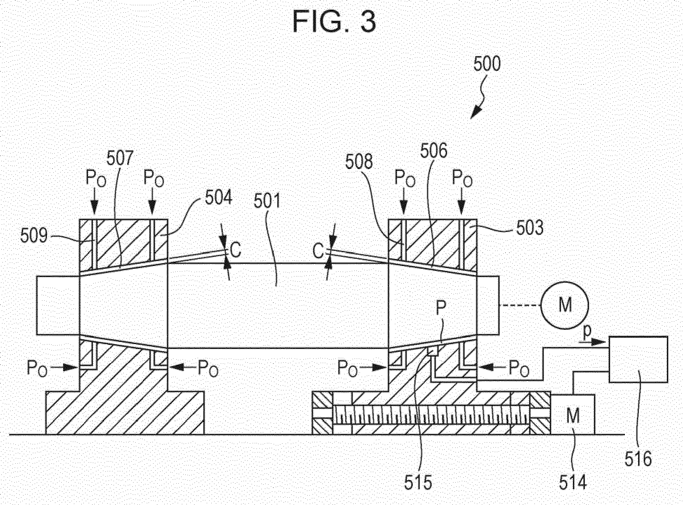

Japanese Unexamined Patent Application Publication No. 58-196319 describes an air bearing apparatus 500, which is illustrated in FIG. 3. The air bearing apparatus 500 includes a rotating shaft 501, a bearing member 503, a bearing member 504, an air bearing 506, an air bearing 507, a flow channel 508, and a flow channel 509. The air bearing 506 is arranged between the rotating shaft 501 and the bearing member 503. The air bearing 507 is arranged between the rotating shaft 501 and the bearing member 504. The flow channel 508 is provided in the bearing member 503 and the flow channel 509 is provided in the bearing member 504. Pressurized air is supplied to the air bearing 506 from the flow channel 508. Further, pressurized air is supplied to the air bearing 507 from the flow channel 509. The air bearing 506 and the air bearing 507 are each formed so as to be tapered, and the largest-diameter side of the air bearing 506 and the largest-diameter side of the air bearing 507 face each other.

A pressure sensor 515 is provided on a bearing face of the bearing member 503. The pressure sensor 515 senses pressure P in the air bearing 506 and an output signal p from the pressure sensor 515 is transferred to a computing unit 516. The computing unit 516 uses the pressure P as a signal for control by converting the pressure P into bearing clearance C or without any conversion. To cause the output signal p to have a predefined value, the value of the bearing clearance C is changed by moving the bearing member 503 rightward or leftward in FIG. 3 with a feed motor 514. Accordingly, the bearing clearance C is maintained at an optimum value.

The techniques according to Japanese Unexamined Patent Application Publication No. 58-196319 is susceptible to review for increasing the reliability of the turbomachine from another viewpoint.

### SUMMARY

One non-limiting and exemplary embodiment provides a new turbomachine with high reliability.

In one general aspect, the techniques disclosed here feature a turbomachine including: a shaft that includes a tapered portion and a cylindrical portion, the tapered portion having a diameter that decreases toward an end of the shaft in an axial direction of the shaft, the cylindrical portion being adjacent to a largest-diameter end of the tapered portion; an impeller that includes a suction face oriented in the axial direction of the shaft, that is fixed to the cylindrical portion, and that sucks working fluid to deliver the working fluid, saturated vapor pressure of the working fluid as absolute pressure at room temperature being lower than atmospheric pressure; and a bearing that is arranged apart from the impeller in a direction to which the suction face of the impeller is oriented, that supports the shaft, and that includes a tapered support face and a cylindrical support face, the tapered support face supporting the tapered portion via a lubricant, the cylindrical support face supporting the cylindrical portion via the lubricant, where at least part of the cylindrical support face is made from any one selected from a group consisting of (a) an alloy that contains graphite and whose principal constituent is copper, (b) rubber, and (c) a material whose principal constituent is a silicon nitride or a silicon carbide.

The above-described turbomachine has high reliability.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

FIG. 1 is a cross-sectional view that illustrates an example of the turbomachine according to the present disclosure;
FIG. 2 is a cross-sectional view that illustrates part of the turbomachine in FIG. 1 through enlargement; and
FIG. 3 is a cross-sectional view that illustrates a conventional air bearing apparatus.

### DETAILED DESCRIPTION

### Knowledge based on Review of the Present Inventors

The present inventors have conducted review for increasing the reliability of a turbomachine where working fluid whose saturated vapor pressure as absolute pressure at room temperature, 20°C ± 15°C according to Japanese Industrial Standards (JIS) Z 8703, is lower than atmospheric pressure. Through the review, it has been found that the reliability of a turbomachine can be increased by a bearing supporting a tapered portion and a cylindrical portion of a shaft that includes the tapered portion and the cylindrical portion via a lubricant. When the turbomachine is placed so that the shaft is arranged approximately horizontally, vertical downward load based on the weight of the shaft is applied in a radial direction of the bearing. In a state where the shaft is rotating at high speed, the pressure of the lubricant present between the outer peripheral face of the shaft and the support face of the bearing rises because of wedge effect. Accordingly, the load in the radial direction is supported and the lubrication between the shaft and the bearing exhibits the hydrodynamic lubrication mode. Thus, solid contact, which is direct contact between the shaft and the bearing, does not occur and neither the shaft nor the bearing wears.

In contrast, in a state where the shaft is rotating at low speed in the starting operation or stopping operation of the turbomachine, no wedge effect occurs and support power caused by the pressure of the lubricant decreases, and clearance between the outer peripheral face of the shaft and the support face of the bearing is approximately zero. Thus, the lubrication between the shaft and the bearing exhibits the boundary lubrication mode, and the shaft and the bearing slide while being in contact. During this time, the bearing or the outer peripheral face (slide face) of the shaft wears. In particular, when the weight of the shaft is large, the load of the shaft causes the wear to develop excessively and the shaft or the bearing sustains damage such that the reliability of the turbomachine can be lost. In view of such circumstances, the present inventors have thoroughly reviewed techniques that can prevent the shaft or the bearing from wearing because of the load of the shaft even in a state where the shaft is rotating at low speed and that can increase the reliability of the turbomachine. Through the review, the present inventors have newly found that when at least part of the support face of the bearing that supports the cylindrical portion of the shaft is made from a certain material, the wear caused by the load of the shaft can be inhibited even in a state where the shaft is rotating at low speed. On the basis of such new knowledge, the present inventors have conceived the turbomachine according to the present disclosure. The above-described knowledge is based on the review of the present inventors and represents no admission as prior-art techniques.

A first aspect of the present disclosure provides a turbomachine including:
a shaft that includes a tapered portion and a cylindrical portion, the tapered portion having a diameter that decreases toward an end of the shaft in an axial direction of the shaft, the cylindrical portion being adjacent to a largest-diameter end of the tapered portion;
an impeller that includes a suction face oriented in the axial direction of the shaft, that is fixed to the cylindrical portion, and that sucks working fluid to deliver the working fluid, saturated vapor pressure of the working fluid as absolute pressure at room temperature being lower than atmospheric pressure; and
a bearing that is arranged apart from the impeller in a direction to which the suction face of the impeller is oriented, that supports the shaft, and that includes a tapered support face and a cylindrical support face, the tapered support face supporting the tapered portion via a lubricant, the cylindrical support face supporting the cylindrical portion via the lubricant, where
at least part of the cylindrical support face is made from any one selected from a group consisting of (a) an alloy that contains graphite and whose principal constituent is copper, (b) rubber, and (c) a material whose principal constituent is a silicon nitride or a silicon carbide.

In the first aspect according to the present disclosure, when at least part of the cylindrical support face is made from (a) an alloy that contains graphite and whose principal constituent is copper, advantages described below can be obtained. When the weight of the shaft is large and the lubrication between the shaft and the bearing in the starting operation or stopping operation of the turbomachine exhibits the boundary lubrication mode, the cylindrical support face supports the radial load of the shaft. At least part of the cylindrical support face is made from an alloy that contains graphite and whose principal constituent is copper, and part of the graphite is present on the cylindrical support face. Accordingly, wear of the shaft and the bearing can be inhibited. As a result, the turbomachine according to the first aspect has high reliability. Further, since only at least part of the cylindrical support face that mainly supports the radial load is made from the above-described alloy, the manufacture of the bearing can be prevented from becoming complicated.

In the first aspect according to the present disclosure, when at least part of the cylindrical support face is made from (b) rubber, the rubber is deformed along the projecting and depressed shape of the outer peripheral face of the shaft and thus, the lubrication between the shaft and the bearing easily transitions to the hydrodynamic lubrication mode while the rotational speed of the shaft is relatively low. Accordingly, even when the weight of the shaft is large, wear of the shaft and the bearing can be inhibited. As a result, the turbomachine according to the present aspect has high reliability.

In the first aspect according to the present disclosure, when at least part of the cylindrical support face is made from (c) a material whose principal constituent is a silicon nitride or a silicon carbide, advantages described below can be obtained. When a lubricant that contains water that is liquid as a principal constituent is used, the viscosity of the lubricant is low. In this case, the thickness of the lubricating film needed so as to suitably cause wedge effect is smaller than the thickness of the lubricating film needed in using a high-viscosity lubricant, such as lubricating oil. With a thin lubricating film, when the rotational speed of the shaft is not increased to a certain extent, it is difficult for the lubrication to enter the hydrodynamic lubrication mode in the starting operation or stopping operation of the turbomachine. According to the present aspect, however, friction between the cylindrical support face and the shaft causes tribochemical reaction and atoms of the silicon included in the material whose principal constituent is a silicon nitride or a silicon carbide react with the water to generate a low-friction substance, such as silanol, on the cylindrical support face. Accordingly, the resistance to wear of the shaft and the bearing is enhanced. As a result, even when the weight of the shaft is large and the shaft is rotating at low speed in the starting operation or stopping operation of the turbomachine, wear of the shaft and the bearing can be inhibited and the turbomachine has high reliability.

In a second aspect according to the present disclosure, for example, at least part of the cylindrical support face according to the first aspect is made from a material whose principal constituent is a silicon nitride or a silicon carbide, and
the lubricant contains water that is liquid as a principal constituent.

A refrigeration cycle apparatus according to a third aspect of the present disclosure includes:
a channel through which working fluid passes, saturated vapor pressure of the working fluid as absolute pressure at room temperature being lower than atmospheric pressure; and
the turbomachine according to the first aspect or the second aspect, the turbomachine appearing on the channel.

According to Japanese Unexamined Patent Application Publication No. 58-196319, pressurized air is supplied to the air bearing 506 from the flow channel 508 and pressurized air is supplied to the air bearing 507 from the flow channel 509. So, even when the rotating shaft 501 is rotating at low speed, the rotating shaft 501 and the bearing member 503 or the bearing member 504 are caused by the air to move smoothly during a period where pressurized air is supplied. Thus, it is not assumed in Japanese Unexamined Patent Application Publication No. 58-196319 that when the rotating shaft 501 is rotating at low speed, the rotating shaft 501 and the bearing member 503 may come into contact. Besides, the bearing member 503 and the bearing member 504 are arranged so as to correspond to the portions of the rotating shaft 501 that are formed so as to be tapered, and the bearing is not arranged over the cylindrical portion of the rotating shaft 501. It is therefore impossible for persons skilled in the art to conceive the turbomachine according to the first to third aspects on the basis of the description in Japanese Unexamined Patent Application Publication No. 58-196319.

Embodiments of the present disclosure are described below with reference to the drawings. The description below relates to examples of the present disclosure and the present disclosure is not limited to the examples.

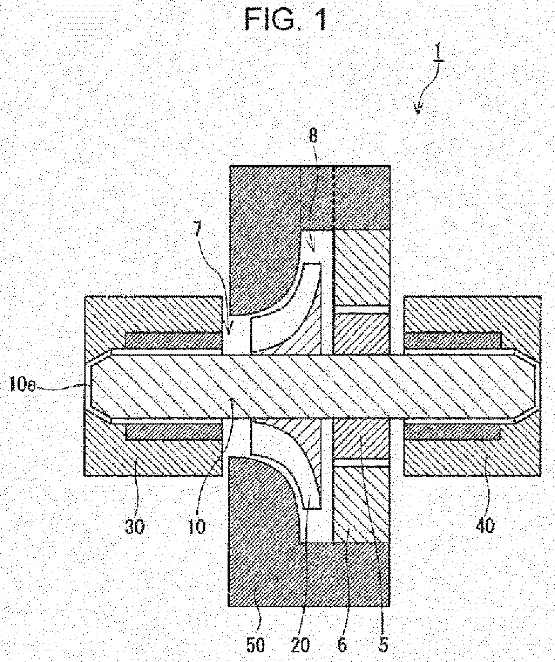

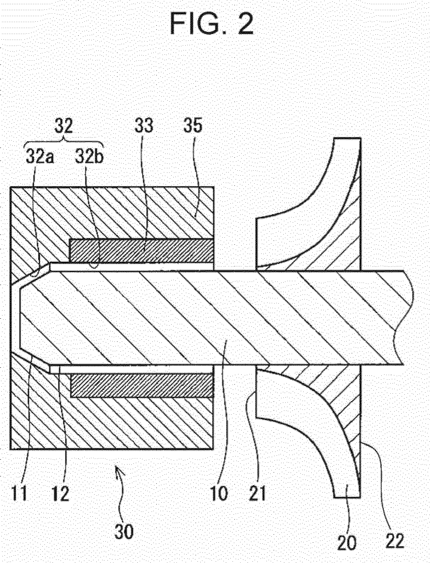

As illustrated in FIG. 1, a turbomachine 1 according to the present disclosure includes a shaft 10, an impeller 20, and a bearing 30. The shaft 10 includes a tapered portion 11 and a cylindrical portion 12. The tapered portion 11 has a diameter that decreases toward an end 10e of the shaft 10 in the axial direction. The cylindrical portion 12 is adjacent to a largest-diameter end of the tapered portion 11. In other words, the cylindrical portion 12 is connected to the tapered portion 11 at the largest-diameter end of the tapered portion 11. The impeller 20 is fixed to the cylindrical portion 12. The impeller 20 has a suction face 21 oriented in the axial direction of the shaft 10. Working fluid whose saturated vapor pressure as absolute pressure at room temperature is lower than atmospheric pressure is sucked from the suction face 21. The impeller 20 includes a back face 22. The back face 22 is positioned opposite the suction face 21 in the axial direction. The impeller 20 includes blades. Herein, the outer edges of the blades that face suction space 7 are defined as the front edges. The bearing 30, the suction face 21, and the back face 22 are located in this order in the axial direction. In other words, the bearing 30, the front edges, and the back face 22 are located in this order in the axial direction. The impeller 20 sucks the working fluid whose saturated vapor pressure as absolute pressure at room temperature is lower than atmospheric pressure while bringing the working fluid into contact with the suction face 21 to deliver the working fluid. The bearing 30 is arranged apart from the impeller in a direction to which the suction face 21 of the impeller 20 is oriented and rotatably supports the shaft 10. As illustrated in FIG. 2, the bearing 30 includes a support face 32 that includes a tapered support face 32a and a cylindrical support face 32b. The tapered support face 32a supports the tapered portion 11 via a lubricant. The cylindrical support face 32b supports the cylindrical portion 12 via the lubricant. Specifically, the tapered support face 32a supports the tapered portion 11 while the lubricant is interposed between the tapered support face 32a and the outer peripheral face of the tapered portion 11 of the shaft 10. The cylindrical support face 32b supports the cylindrical portion 12 while the lubricant is interposed between the cylindrical support face 32b and the outer peripheral face of the cylindrical portion 12 of the shaft 10. At least part of the cylindrical support face 32b included in the support face 32 of the bearing 30 is made from an alloy that contains graphite and whose principal constituent is copper. The "principal constituent" used herein represents a constituent that is included the most in terms of mass.

As illustrated in FIG. 1, for example, the turbomachine 1 further includes a motor rotor 5, a motor stator 6, a second bearing 40, and a casing 50. For example, the bearing 30 supports one end portion of the shaft 10 in the axial direction while the second bearing 40 supports the other end portion of the shaft 10 in the axial direction. The motor rotor 5 is fixed to the shaft 10 between the impeller 20 and the second bearing 40 in the axial direction of the shaft 10. The motor stator 6 is arranged so as to surround the motor rotor 5 in the circumferential direction of the shaft 10. A rotating magnetic field induced by the motor stator 6 produces rotational torque for the motor rotor 5. Accordingly, the shaft 10 and the impeller 20 are driven so as to rotate at high speed. The working fluid whose saturated vapor pressure as absolute pressure at room temperature is lower than atmospheric pressure is present around the impeller 20. In the casing 50, the suction space 7 is defined between the impeller 20 and the bearing 30 in the axial direction of the shaft 10. Further, in the casing 50, discharge space 8 is defined outside the impeller 20 in the radial direction.

Typically, the turbomachine 1 functions as a compressor and the axis of the shaft 10 extends horizontally. When the impeller 20 rotates at high speed, the working fluid present in the suction space 7 is sucked into the impeller 20. The working fluid is compressed by passing through the impeller 20 and the compressed high-pressure working fluid is supplied to the discharge space 8. The working fluid low in pressure is present in the suction space 7 and the pressure of the high-pressure working fluid derived from the discharge space 8 affects the back face 22 of the impeller 20. Thus, thrust load occurs in a direction from the impeller 20 to the bearing 30. In this case, the thrust load of the shaft 10 can be supported by the tapered support face 32a of the bearing 30 in a state where the lubricant is interposed between the tapered support face 32a and the outer peripheral face of the tapered portion 11. In contrast, the radial load of the shaft 10 is supported by the cylindrical support face 32b of the bearing 30 in a state where the lubricant is interposed between the cylindrical support face 32b and the outer peripheral face of the cylindrical portion 12. Thus, the radial load applied to the tapered support face 32a is very small.

When the shaft is rotating at low speed in the starting operation or stopping operation of the turbomachine 1, the lubrication between the shaft 10 and the bearing 30 can exhibit the boundary lubrication mode. In this case, as described above, the cylindrical support face 32b mainly supports the radial load of the shaft 10. At least part of the cylindrical support face 32b is made from an alloy that contains graphite and whose principal constituent is copper, and part of the graphite is present on the cylindrical support face 32b. Thus, solid lubrication effect of the graphite inhibits wear of the shaft 10 and the bearing 30. In view of suitable exertion of the solid lubrication effect of the graphite, the percentage of the graphite content in the alloy may be for example, 6% or more by mass. Further, since the alloy includes copper as a principal constituent, wettability to the graphite is increased and the graphite can be easily dispersed evenly over the cylindrical support face 32b. Accordingly, the solid lubrication effect can be suitably exerted. Even when the weight of the shaft 10 is large, wear of the bearing 30 can be inhibited in the starting operation or stopping operation of the turbomachine 1. As a result, the turbomachine 1 has high reliability. In addition, since only at least part of the cylindrical support face 32b that mainly supports the radial load is made from the above-described alloy, the manufacture of the bearing 30 can be prevented from becoming complicated.

For example, 50% or more of the area of the cylindrical support face 32b is made from the above-described alloy. In this case, for example, at least the lower half of the cylindrical support face 32b is made from the above-described alloy. Desirably, the overall cylindrical support face 32b is made from the above-described alloy.

The above-described alloy desirably contains tin. Accordingly, the wettability to the graphite is further increased and the graphite can be dispersed evenly over the cylindrical support face 32b.

As illustrated in FIG. 2, the bearing 30 includes for example, a cylinder component 33 and a tapered component 35. The tapered component 35 is a cylindrical component and the inner peripheral face of the tapered component 35 includes the tapered support face 32a. The tapered support face 32a defines a tapered hole. The inner peripheral face of the tapered component 35 is made from a material different from the above-described alloy. The inner peripheral face of the tapered component 35 is made from brass for example. In this case, the tapered component 35 can be worked easily and the accuracy of cutting for forming the tapered support face 32a can be increased. When for example, the shaft 10 is made of steel, seizure of the tapered support face 32a on the shaft 10 is unlikely to occur. The tapered component 35 may be made from a material other than brass only when the material enables high-accuracy machining and has stiffness that is so high that deformation caused during operation of the turbomachine 1 can be ignored. The tapered component 35 may be made from for example, ceramics, high-stiffness resin, or porous metal.

The inner peripheral face of the tapered component 35 further includes for example, part of the cylindrical support face 32b. The cylindrical support face 32b defines a straight hole having a diameter that is uniform in the axial direction.

As illustrated in FIG. 2, the cylinder component 33 is installed in the tapered component 35. The inner peripheral face of the cylinder component 33 defines at least part of the cylindrical support face 32b. The inner peripheral face of the cylinder component 33 is made from the above-described alloy. As the above-described alloy, for example, Thermalloy (registered trademark) Type D of Daido Metal Co., Ltd. can be used.

The second bearing 40 is not particularly limited and for example, has a similar structure to that of the bearing 30. For example, the second bearing 40 includes a support face that can support the radial load of the shaft 10 in a state where the lubricant is interposed between the support face and the outer peripheral face of the shaft 10, and at least part of the support face is made from the above-described alloy.

The lubricant is not particularly limited and may be liquid that includes an identical constituent to that of the working fluid for the turbomachine 1. For example, when the turbomachine 1 functions as a compressor in a refrigeration cycle, a liquid coolant in the refrigeration cycle is supplied between the support face 32 of the bearing 30 and the outer peripheral face of the shaft 10 as the lubricant.

Only at least part of the cylindrical support face 32b included in the support face 32 of the bearing 30 may be made from rubber instead of being made from the above-described alloy. In this case, since rubber is more flexible than metal, the cylindrical support face 32b is deformed along the shape of the outer peripheral face of the cylindrical portion 12. Accordingly, the lubrication between the shaft 10 and the bearing 30 easily enters the hydrodynamic lubrication mode while the rotational speed of the shaft 10 is relatively low. Thus, even when the weight of the shaft 10 is large and the shaft 10 is rotating at low speed in the starting operation or stopping operation of the turbomachine 1, wear of the shaft 10 and the bearing 30 can be inhibited and the turbomachine 1 has high reliability.

For example, when the turbomachine 1 functions as a compressor in a refrigeration cycle and a liquid coolant is supplied between the support face 32 and the outer peripheral face of the shaft 10 as the lubricant, a lubricating film formed between the support face 32 and the outer peripheral face of the shaft 10 is likely to be thin. This is because in many cases, a coolant has a low viscosity so that pressure loss caused in the coolant passing through a heat exchanger, such as an evaporator, is small, and the thickness of a lubricating film needs to be small so as to suitably produce support power based on wedge effect using such a low-viscosity lubricant. When the projections and depressions on the outer peripheral face as the slide face are higher than the thickness of the lubricating film, the lubrication between the shaft and the bearing enters the boundary lubrication mode. Thus, when the turbomachine 1 functions as a compressor in a refrigeration cycle and a liquid coolant is supplied between the support face 32 and the outer peripheral face of the shaft 10 as the lubricant, the lubrication easily enters the boundary lubrication mode even in a case where the shaft 10 is rotating at a rotational speed that is relatively high. When only at least part of the cylindrical support face 32b is made from rubber, however, the lubrication between the shaft 10 and the bearing 30 easily enters the hydrodynamic lubrication mode even in a case where the shaft 10 is rotating at a rotational speed that is relatively low in the starting operation or stopping operation of the turbomachine 1. Accordingly, even when the turbomachine 1 functions as a compressor in a refrigeration cycle and a liquid coolant is supplied between the support face 32 and the outer peripheral face of the shaft 10 as the lubricant, the turbomachine 1 has high reliability.

When only at least part of the cylindrical support face 32b included in the support face 32 of the bearing 30 is made from rubber, the rubber is for example, natural rubber, styrene-butadiene rubber, butadiene rubber, butyl rubber, ethylenepropylene rubber, nitrile rubber, chloroprene rubber, fluorine rubber, silicone rubber, or urethane rubber.

For example, 50% or more of the area of the cylindrical support face 32b is made from rubber. In this case, for example, at least the lower half of the cylindrical support face 32b is made from the rubber. Desirably, the overall cylindrical support face 32b is made from the rubber.

Only at least part of the cylindrical support face 32b included in the support face 32 of the bearing 30 may be made from a material whose principal constituent is a silicon nitride or a silicon carbide instead of being made from the above-described alloy. In this case, the lubricant contains water that is liquid as a principal constituent. Since in this case, the viscosity of the lubricant is low, the thickness of the lubricating film needed so as to suitably cause wedge effect is smaller than the thickness of the lubricating film needed in using a high-viscosity lubricant, such as lubricating oil. With a thin lubricating film, when the rotational speed of the shaft is not increased to a certain extent, it is difficult for the lubrication between the shaft and the bearing to enter the hydrodynamic lubrication mode in the starting operation or stopping operation of the turbomachine. When only at least part of the cylindrical support face 32b included in the support face 32 is made from a material whose principal constituent is a silicon nitride or a silicon carbide instead of being made from the above-described alloy, tribochemical reaction is caused by the friction between the cylindrical support face 32b and the shaft 10. For example, atoms of the silicon included in the material whose principal constituent is a silicon nitride or a silicon carbide react with the water and a low-friction substance, such as silanol, is generated on the cylindrical support face 32b. Accordingly, the resistance to wear of the shaft 10 and the bearing 30 is enhanced. As a result, even when the weight of the shaft 10 is large and the shaft 10 is rotating at low speed in the starting operation or stopping operation of the turbomachine 1, wear of the shaft 10 and the bearing 30 is inhibited and the turbomachine 1 has high reliability.

For example, 50% or more of the area of the cylindrical support face 32b is made from a material whose principal constituent is a silicon nitride or a silicon carbide. In this case, for example, at least the lower half of the cylindrical support face 32b is made from the material whose principal constituent is a silicon nitride or a silicon carbide. Desirably, the overall cylindrical support face 32b is made from the material whose principal constituent is a silicon nitride or a silicon carbide.

Another expression of the turbomachine according to the present disclosure is described below.

The turbomachine according to the present disclosure includes:
a shaft that includes a tapered portion and a cylindrical portion, the tapered portion having a diameter that decreases toward an end of the shaft in an axial direction of the shaft, the cylindrical portion being adjacent to a largest-diameter end of the tapered portion;
an impeller that includes a suction face oriented in the axial direction of the shaft, that is fixed to the cylindrical portion, and that sucks working fluid while bringing the working fluid into contact with the suction face to deliver the working fluid, saturated vapor pressure of the working fluid as absolute pressure at room temperature being lower than atmospheric pressure; and
a bearing that is arranged apart from the impeller in a direction to which the suction face of the impeller is oriented, that supports the shaft, and that includes a support face including a tapered support face and a cylindrical support face, the tapered support face supporting the tapered portion while a lubricant is interposed between the tapered support face and an outer peripheral face of the tapered portion of the shaft, the cylindrical support face supporting the cylindrical portion while the lubricant is interposed between the cylindrical support face and an outer peripheral face of the cylindrical portion of the shaft, where
at least part of the cylindrical support face included in the support face of the bearing is made from any one selected from a group consisting of (a) an alloy that contains graphite and whose principal constituent is copper, (b) rubber, and (c) a material whose principal constituent is a silicon nitride or a silicon carbide.

The turbomachine according to the present disclosure is usable advantageously as a compressor in a refrigeration cycle apparatus that can be utilized for a turborefrigerator or an air conditioning product, such as an industrial-use air conditioner, for example.

## Claims

1. A turbomachine comprising:
a shaft (10) that includes a tapered portion (11) and a cylindrical portion (12), the tapered portion (11) having a diameter that decreases toward an end (10e) of the shaft (10) in an axial direction of the shaft (10), the cylindrical portion (12) being adjacent to a largest-diameter end of the tapered portion (11);
an impeller (20) that includes a suction face (21) oriented in the axial direction of the shaft (10), that is fixed to the cylindrical portion (12), and that sucks working fluid to deliver the working fluid, saturated vapor pressure of the working fluid as absolute pressure at room temperature being lower than atmospheric pressure; and
a bearing (30) that is arranged apart from the impeller (20) in a direction to which the suction face (21) of the impeller (20) is oriented, that supports the shaft (10), and that includes a tapered support face (32a) and a cylindrical support face (32b), the tapered support face (32a) supporting the tapered portion (11) via a lubricant, the cylindrical support face (32b) supporting the cylindrical portion (12) via the lubricant, wherein
at least part of the cylindrical support face (32b) is made from any one selected from a group consisting of (a) an alloy that contains graphite and whose principal constituent is copper, (b) rubber, and (c) a material whose principal constituent is a silicon nitride or a silicon carbide.

2. The turbomachine according to Claim 1, wherein
at least part of the cylindrical support face (32b) is made from a material whose principal constituent is a silicon nitride or a silicon carbide, and
the lubricant contains water that is liquid as a principal constituent.
